# EUROPÄISCHE PATENTSCHRIFT

(11) **EP 3 816 023 B1**
(45) Veröffentlichungstag und Bekanntmachung des Hinweises auf die Patenterteilung: **07.06.2023**
(21) Anmeldenummer: 20202579.7
(22) Anmeldetag: 19.10.2020
(51) Int. Cl.: B62D 27/06, B62D 33/04, B62D 33/06, B62D 25/06, B62D 29/04

(54) **BEFESTIGUNGSVORRICHTUNG FÜR EIN KRAFTFAHRZEUG**
FIXING DEVICE FOR A MOTOR VEHICLE
DISPOSITIF DE FIXATION POUR UN VÉHICULE AUTOMOBILE

(30) Priorität: 30.10.2019 DE 102019007580
(43) Veröffentlichungstag der Anmeldung: 05.05.2021
(60) Teilanmeldung: 23169044.7
(73) Patentinhaber: MAN Truck & Bus SE, 80995 München (DE)
(72) Erfinder: Schmitz, Andreas, 80995 München (DE); Fraunhofer, Stephan, 83043 Bad Aibling (DE)
(74) Vertreter: v. Bezold & Partner Patentanwälte - PartG mbB

(56) Entgegenhaltungen:
- DE-A1- 2 700 665
- DE-A1- 3 608 306
- DE-A1- 3 737 230
- DE-B- 1 238 349
- DE-U1- 20 007 276
- US-A- 3 709 733

## Beschreibung

Die Erfindung betrifft eine Vorrichtung zur Befestigung einer Komponente an einer Karosserie eines Kraftfahrzeugs, vorzugsweise eines Nutzfahrzeugs.

Fahrerhäuser von Lastkraftwagen können für den Fernverkehr mit einer oder mehreren Liegen ausgestattet sein. Die Liegen können hinter den Sitzen an einer Rückwand des Fahrerhauses angeordnet sein. Beispielsweise kann eine Doppelstockliege vorgesehen sein. Es gibt auch Varianten, bei denen die obere Liege als Gepäckaufbewahrung ausgeführt werden kann. Um bei einem Zwei-Mann-Betrieb des Lastkraftwagens dem gerade ruhenden Fahrer die Möglichkeit zu geben, sich in einer der Liegen auszuruhen, können Liegenherausfallsicherungen wie Gurte oder Netze vorgesehen werden, die den Liegenbenutzer und die Gepäckstücke während der Fahrt bei eventuellen Bremsmanövern oder sogar Unfällen vor dem Herausfallen bewahren. Die Liegen und die Liegenherausfallsicherungen sind sicher im Fahrerhaus zu befestigen, insbesondere an Karosserieteilen des Fahrerhauses. Neben der Liege und der Liegenherausfallsicherung gibt es weitere Komponenten, wie beispielsweise äußere Windleitelemente, die sicher an der Karosserie befestigt werden müssen.

Liegen für Fahrerhäuser von Lastkraftwagen sind beispielsweise aus der EP 0 168 708 B1 und der DE 20 2011 106 871 U1 bekannt.

Karosserieteile werden immer häufiger als Leichtbauteile ausgeführt, z. B. als Kunststoffsandwichteile. Eine sichere Befestigung von Komponenten an derartigen Leichtbauteile erfordert weitere Entwicklungen im Bereich der Befestigungstechnik.

Die DE 10 2016 111 171 B4 offenbart beispielsweise eine Konsole zur Befestigung an einer Außenfläche eines Dach-, Wand- oder Bodenelements. Die Konsole umfasst einen Tragabschnitt, der eine größere Länge als Breite aufweist und an dem eine zur Anlage an der jeweiligen Außenfläche vorgesehene Anlagefläche ausgebildet ist. An dem Tragabschnitt ist mindestens ein Befestigungsbereich vorhanden, auf den im Gebrauch ein Befestigungselement wirkt, über das die Konsole an der Außenfläche gehalten ist. Der Tragabschnitt ist mindestens in einem sich über seine Länge erstreckenden Federabschnitt nach Art einer Blattfeder gegenüber einer gegen die Anlagefläche wirkenden Druckkraft elastisch nachgiebig und derart geformt, dass der Federabschnitt bei der Montage an der Außenfläche aus seinem bei nicht montierter Konsole entspannten Zustand in einen verspannten Zustand gebracht wird, indem er elastisch nachgiebig eine Druckkraft gegen die Außenfläche ausübt.

Die DE 12 38 349 B offenbart den Oberbegriff des unabhängigen Anspruchs und zeigt eine Einrichtung zum Verbinden eines Kasten- oder Profilträgers mit der plattenförmigen Außenwand eines Fahrzeuges, wobei die Außenwand als Verbundbauteil aus zwei dünnen Außenplatten und einem zwischen diesen eingeschäumten und mit den Außenplatten fest verbundenen starren Kunststoffschaum als Stützkörper besteht. Die dem Träger zugewandte Außenplatte ist innerhalb des Verbundbauteiles mit einer Verstärkungsplatte fest verbunden, die mit einer als Gegenplatte dienenden Anschlussplatte des Trägers verschraubt ist.

Die DE 37 37 230 A1 offenbart eine Befestigung zweier Bauteile mittels Schrauben od. dgl. Befestigungselemente aneinander, wobei das eine Bauteil einen rückseitigen Träger und eine vorderseitige, durch eine Haut oder Folie abgedeckte Polsterschicht aus Kunststoffschaum umfasst, auf der das andere, wenigstens im Befestigungsbereich aus einem formstabilen Material bestehende Bauteil flächig anliegt. Die Bauteile weisen im Bereich jeder Befestigungsstelle eine sie durchsetzende Bohrung für jeweils ein Befestigungselement auf, und das auf der Polsterschicht aufliegende Bauteil ist im Bereich jeder Bohrung mit einem rückseitigen, die axiale Erstreckung der Bohrung dieses Bauteils verlängernden und dieselbe konzentrisch umschließenden Ringansatz ausgebildet.

Die DE 200 07 276 U1 offenbart ein Befestigungselement vorzugsweise für aus Kunststoff bestehende Sandwich-Elemente mit einer in einen Profilstab eindrehbaren, einen Kopf aufweisenden Schraube. Die Schraube ist innerhalb einer Hülse angeordnet, die form- und kraftschlüssig in eine Bohrung eines Paneels oder eines Profils einsetzbar ist.

Die US 3 709 733 A offenbart eine Verbundplattenstruktur, die Hartschaumplatten umfasst, die jeweils von einem damit verbundenen Mantel umschlossen sind, wobei die ummantelten Platten zur Bildung eines Kerns nebeneinander und an den Kanten anliegend angeordnet sind. Die Außenhäute sind an den gegenüberliegenden Seiten des Kerns befestigt. Die Montageeinsätze sind in den Hohlräumen des Kerns vergossen, wo immer dies erforderlich ist.

Der Erfindung liegt die Aufgabe zu Grunde, eine alternative und/oder verbesserte Technik zur Befestigung einer Komponente an einer Karosserie eines Kraftfahrzeugs zu schaffen.

Die Aufgabe wird gelöst durch die Merkmale des Anspruchs 1. Vorteilhafte Weiterbildungen sind in den abhängigen Ansprüchen und der Beschreibung angegeben.

Die Erfindung betrifft eine Vorrichtung zur Befestigung einer Komponente an einer Karosserie eines Kraftfahrzeugs, vorzugsweise eines Nutzfahrzeugs (z. B. Lastkraftwagen oder Omnibus). Die Vorrichtung weist ein Karosserieteil, vorzugsweise ein Karosseriedachteil (z. B. Fahrerhauskarosseriedach) auf. Das Karosserieteil weist eine Außenlage, eine Schaumstoffzwischenschicht und eine Innenlage auf. Die Schaumstoffzwischenschicht ist (z. B. direkt) zwischen der Außenlage und der Innenlage angeordnet (z. B. anliegend an der Innenlage und/oder der Außenlage). Die Vorrichtung weist eine Verbindungseinrichtung auf, die an der Außenlage und an der Innenlage (z. B. flächig) anliegt und die zur Befestigung der Komponente ausgebildet ist.

Die Vorrichtung kann eine optimale Krafteinleitung in das Karosserieteil ermöglichen, da es sowohl mit der Außenlage als auch mit der Innenlage verbunden ist. Eine übermäßige Belastung der Schaumstoffzwischenschicht wird verhindert, sodass auch das Risiko eines ungewünschten Ablösens der Schaumstoffzwischenschicht von der Außenlage oder der Innenlage deutlich verringert werden kann. Die Vorrichtung kann die sichere Befestigung von vergleichsweise schweren Komponenten (z. B. Liege mit ruhender Person) ermöglichen. Über die Fahrzeuglebensdauer kann mit der vorgeschlagenen Konstruktion, bei der die Verbindungseinrichtung sowohl an der Außenlage als auch an der Innenlage anliegt, ein ungewünschtes Setzungsverhalten verhindert werden.

In einem Ausführungsbeispiel weist die Vorrichtung ferner die Komponente, vorzugsweise Interieurkomponente oder Exterieurkomponente, auf. Die Komponente ist an der Verbindungseinrichtung befestigt. Die Komponente ist vorzugweise als eine Liege, eine Liegenherausfallsicherung (z. B. Gurt und/oder Netz), eine Gepäckaufbewahrung, ein Dachspoiler, ein Windleitelement, ein Beleuchtungselement und/oder ein Geräteträger ausgeführt. Es ist auch möglich, dass mehrere Komponenten an der Verbindungseinrichtung befestigt sind (z. B. Liege, Liegenherausfallsicherung und/oder Gepäckaufbewahrung).

In einem weiteren Ausführungsbeispiel ist das Karosserieteil als ein Kunststoffsandwichteil ausgeführt.

In einem weiteren Ausführungsbeispiel ist die Schaumstoffzwischenschicht als eine Kunststoff-Schaumzwischenschicht, vorzugsweise eine Polyurethan-Schaumstoffzwischenschicht, Polystyrol-Schaumstoffzwischenschicht oder eine Polyethylenterephthalat-Schaumstoffzwischenschicht, ausgeführt (z. B. mit einer Materialstärke zwischen 10 mm und 30 mm, bevorzugt rund 20 mm).

In einer Ausführungsform weist die Außenlage und/oder die Innenlage eine kunstharzgetränkte Glasfasermatte in Kontakt mit der Schaumstoffzwischenschicht auf.

In einer weiteren Ausführungsform ist die Verbindungseinrichtung zumindest teilweise in die Schaumstoffzwischenschicht miteingeschäumt, oder die Verbindungseinrichtung ist zumindest teilweise in eine Ausnehmung in der Schaumstoffzwischenschicht eingesteckt. Es ist auch möglich, dass die Verbindungseinrichtung durch ein Durchgangsloch in der Außenlage, der Schaumstoffzwischenschicht und der Innenlage durchgesteckt ist.

In einer weiteren Ausführungsform liegt die Verbindungseinrichtung an einer der Schaumstoffzwischenschicht abgewandten Seite der Außenlage und/oder einer der Schaumstoffzwischenschicht zugewandten Seite der Außenlage an. Alternativ oder zusätzlich liegt die Verbindungseinrichtung an einer der Schaumstoffzwischenschicht abgewandten Seite der Innenlage und/oder an einer der Schaumstoffzwischenschicht zugewandten Seite der Innenlage an.

In einer Ausführungsvariante ist die Verbindungseinrichtung stoffschlüssig mit der Außenlage und/oder der Innenlage verbunden, vorzugsweise durch aneinanderhaftende kunstharzgetränkte Glasfasermatten. Es ist möglich, das die Verbindungseinrichtung an der Außenlage und/oder der Innenlage anhaftet. Damit kann besonders wirksam ein ungewünschtes Ablösen der Außenlage oder der Innenlage von der Schaumstoffzwischenschicht bei Belastung der Verbindungseinrichtung verhindert werden.

Erfindungsgemäß weist die Verbindungseinrichtung einen Block auf, der an einer der Schaumstoffzwischenschicht zugewandten Seite der Außenlage und an einer der Schaumstoffzwischenschicht zugewandten Seite der Innenlage (z. B. flächig) anliegt.

Erfindungsgemäß ist der Block in die Schaumstoffzwischenschicht miteingeschäumt oder in eine Ausnehmung in der Schaumstoffzwischenschicht eingesetzt.

Erfindungsgemäß ist der Block aus mindestens einer kunstharzgetränkten Glasfasermatte hergestellt, vorzugsweise mehrlagig. Alternativ oder zusätzlich sind zumindest Kontaktflächen zwischen dem Block und der Außenlage und/oder dem Block und der Innenlage aus dem gleichen Material hergestellt, vorzugsweise aus einer kunstharzgetränkten Glasfasermatte. Damit kann eine Haftwirkung zwischen dem Block und der Außenlage und zwischen dem Block und der Innenlage erreicht werden, sodass eine gute Krafteinleitung gewährleistet ist und ein ungewünschtes Ablösen der Außenlage oder der Innenlage von der Schaumstoffzwischenschicht verhindert wird.

Erfindungsgemäß ist der Block im Wesentlichen quaderförmig oder im Wesentlichen prismenförmig mit mindestens zwei parallelen Seiten zum Anlegen an die Außenlage und die Innenlage. Beispielsweise kann eine Höhe des Blocks einer Höhe der Schaumstoffzwischenschicht entsprechen.

In einem Ausführungsbeispiel ist der Block zum Verschrauben mit der zu befestigenden Komponente ausgebildet. Es ist möglich, dass der Block mindestens ein Gewindeloch (z. B. Gewindesackloch) für eine Schraubverbindung zur Befestigung der Komponente aufweist (z. B. direkt in den Block geschnitten). Alternativ ist mindestens ein Verschraubungselement (z. B. Gewindebuchse) zur Befestigung der Komponente, vorzugsweise lösbar, in dem Block aufgenommen. Besonders bevorzugt weist das mindestens eine Verschraubungselement einen umlaufenden Kragenabschnitt auf, dessen Unterseite an einer der Schaumstoffzwischenschicht abgewandten Seite der Innenlage anliegt.

In einem weiteren Ausführungsbeispiel weist die Verbindungseinrichtung eine Profilkomponente, die an einer der Schaumstoffzwischenschicht abgewandten Seite der Außenlage anliegt, und ein Befestigungselement (z. B. Befestigungsplatte, Anbindungsprofil der Komponente), das mit der Profilkomponente verschraubt ist und an einer der Schaumstoffzwischenschicht abgewandten Seite der Innenlage (z. B. flächig) anliegt, auf.

In einer Weiterbildung weist die Profilkomponente ein T-Profilquerschnitt oder ein Doppel-T-Profilquerschnitt auf.

In einer Ausführungsform ist die Profilkomponente eine Metallkomponente, vorzugsweise eine Druckgussmetallkomponente.

In einer weiteren Ausführungsform hält die Profilkomponente mindestens eine Dichtung, vorzugsweise einen Dichtring. Die Dichtung kann vorzugsweise zwischen der Profilkomponente und der Außenlage abdichten. Beispielsweise kann die zumindest eine Dichtung um eine Basis eines Schraubdoms der Profilkomponente angeordnet sein und/oder von einem an der Schaumstoffzwischenschicht abgewandten Seite der Außenlage anliegenden Flanschabschnitt der Profilkomponente gehalten sein.

In einer weiteren Ausführungsform weist die Profilkomponente mindestens einen Schraubdom auf, der vorzugsweise in mindestens ein Durchgangsloch der Außenlage, der Schaumstoffzwischenschicht und der Innenlage eingesteckt und mit dem Befestigungselement verschraubt ist. Vorzugsweise kann der mindestens eine Schraubdom sich verjüngen (zum Beispiel zum Ermöglichen eines spielfreien Einbaus). Der mindestens eine Schraubdom kann ein Untermaß bezüglich einer Materialstärke des Karosserieteils aufweisen und bevorzugt mit einer Vorspannung mit dem Befestigungselement verschraubt sein. Es ist möglich, dass das Durchgangsloch gebohrt ist und/oder eine Mantelfläche des mindestens einen Schraubdoms profiliert ist. Die Profilierung kann beispielsweise beim Gießen der Profilkomponente vorteilhaft sein, da keine Materialanhäufung auftritt.

In einer Ausführungsvariante weist die Verbindungseinrichtung eine Profilkomponente auf, die in einer Ausnehmung des Karosserieteils angeordnet ist, wobei die Ausnehmung durch eine Vertiefung der Außenlage gebildet ist und die Außenlage im Bereich um die Ausnehmung (z. B. in einem Grenzbereich eines Bodenbereichs des Ausnehmung) direkt in die Innenlage übergeht.

In einer Weiterbildung weist die Profilkomponente ein U-Profil oder ein Hutprofil auf.

In einer weiteren Ausführungsvariante ist ein Bodenbereich der Ausnehmung gemeinsam durch die ineinander übergehenden Außenlage und Innenlage gebildet.

In einer weiteren Ausführungsvariante ist eine Mantelfläche der Ausnehmung durch die Außenlage gebildet ist.

In einer weiteren Ausführungsvariante ist die Profilkomponente z. B. außen durch eine Abdeckung abgedeckt, die vorzugsweise mit der Außenlage verklebt ist.

In einer weiteren Ausführungsvariante ist die Profilkomponente in die Ausnehmung eingesetzt.

In einer weiteren Ausführungsvariante ist die Profilkomponente als ein Blechteil, vorzugsweise ein Blechformteil, ausgeführt.

In einem Ausführungsbeispiel ist die Profilkomponente zum Verschrauben mit der zu befestigenden Komponente ausgebildet.

In einem weiteren Ausführungsbeispiel ist in der Profilkomponente mindestens ein Verschraubungselement (z. B. Mutter) zur Befestigung der Komponente aufgenommen (z. B. eingeschweißt oder eingepresst). Vorzugsweise kann das mindestens eine Verschraubungselement einen umlaufenden Kragenabschnitt aufweisen, dessen Unterseite an einer der Schaumstoffzwischenschicht abgewandten Seite der Innenlage anliegt.

Die Erfindung betrifft auch ein Kraftfahrzeug, vorzugsweise ein Nutzfahrzeug (z. B. Lastkraftwagen oder Omnibus), mit einer Vorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Draufsicht auf ein Dach eines Fahrerhauses eines Nutzfahrzeugs;
- Figur 2: einen schematischen Querschnitt durch das Dach;
- Figur 3: eine Schnittansicht durch eine Vorrichtung zur Befestigung einer Komponente an einem Karosserieteil gemäß einem Ausführungsbeispiel der vorliegenden Offenbarung;
- Figur 4: eine weitere Schnittansicht durch die beispielhafte Vorrichtung entlang einer Linie A-A in Figur 3;
- Figur 5: eine perspektivische Ansicht einer Verbindungseinrichtung der beispielhaften Vorrichtung;
- Figur 6: eine Ansicht von unten auf die Verbindungseinrichtung der beispielhaften Vorrichtung;
- Figur 7: eine Schnittansicht durch die Verbindungseinrichtung der beispielhaften Vorrichtung entlang einer Linie B-B in Figur 6;
- Figur 8: eine Schnittansicht durch eine Vorrichtung zur Befestigung einer Komponente an einem Karosserieteil gemäß einem weiteren Ausführungsbeispiel der vorliegenden Offenbarung;
- Figur 9: eine weitere Schnittansicht durch die beispielhafte weitere Vorrichtung entlang einer Linie C-C in Figur 8;
- Figur 10: eine perspektivische Ansicht einer Verbindungseinrichtung der beispielhaften weiteren Vorrichtung;
- Figur 11: eine Seitenansicht auf die Verbindungseinrichtung der beispielhaften weiteren Vorrichtung;
- Figur 12: eine Schnittansicht durch die Verbindungseinrichtung der beispielhaften weiteren Vorrichtung entlang einer Linie D-D in Figur 11;
- Figur 13: eine Schnittansicht durch eine Vorrichtung zur Befestigung einer Komponente an einem Karosserieteil gemäß einem weiteren anderen Ausführungsbeispiel der vorliegenden Offenbarung;
- Figur 14: eine Seitenansicht einer Verbindungseinrichtung einer Variante der beispielhaften weiteren anderen Vorrichtung;
- Figur 15: eine Draufsicht auf die Verbindungseinrichtung der Variante der beispielhaften weiteren anderen Vorrichtung; und
- Figur 16: eine Schnittansicht durch die Verbindungseinrichtung der Variante der beispielhaften weiteren anderen Vorrichtung entlang einer Linie E-E in Figur 15.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

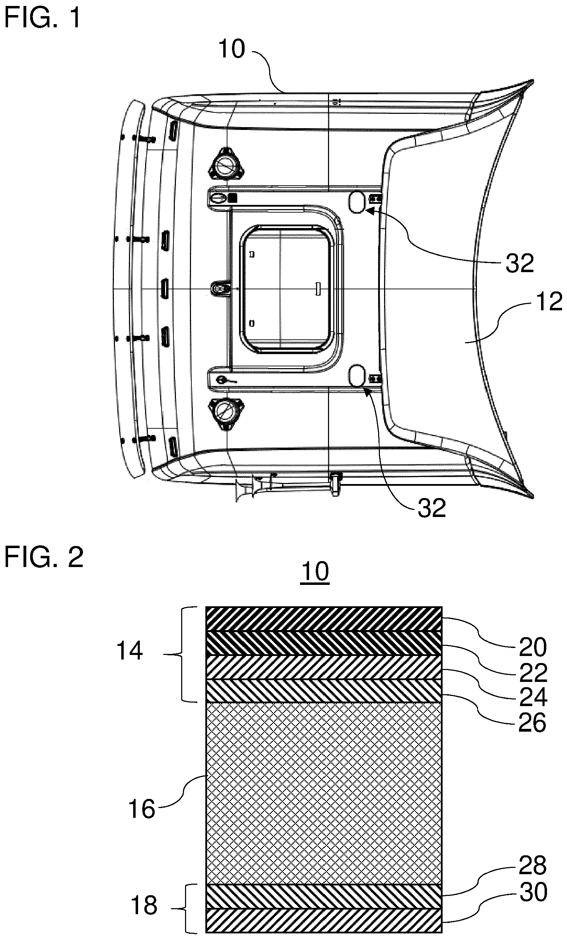

Figur 1 zeigt ein Karosserieteil 10 eines Kraftfahrzeugs. Das Karosserieteil 10 ist bevorzugt als ein Karosseriedachteil eines Fahrerhauses eines Nutzfahrzeugs, insbesondere Lastkraftwagens, ausgeführt. Es ist allerdings auch möglich, dass das Karosserieteil anders ausgeführt und/oder anders angeordnet ist.

An dem Karosserieteil 10 können verschiedene Interieur- oder Exterieurkomponenten 12 befestigt werden, z. B. ein Dachspoiler wie in Figur 1 dargestellt ist. Die an dem Karosserieteil 10 zu befestigende Komponente kann beispielsweise als eine Liege im Fahrerhaus des Nutzfahrzeugs, eine Liegenherausfallsicherung (z. B. ein Gurt und/oder ein Netz) im Fahrerhaus des Nutzfahrzeugs, eine Gepäckaufbewahrung im Fahrerhaus des Nutzfahrzeugs, ein Dachspoiler außen am Fahrerhaus des Nutzfahrzeugs, ein Windleitelement außen an dem Karosserieteil 10, ein Beleuchtungselement innen oder außen an dem Karosserieteil 10 oder ein Geräteträger innen oder außen an dem Karosserieteil 10 ausgeführt sein. Die vorliegende Offenbarung beschäftigt sich mit der Anbindung solcher Komponenten an dem Karosserieteil. Hierbei können vorzugsweise Schwierigkeiten, die sich aufgrund des nachfolgend beschriebenen beispielhaften Aufbaus des Karosserieteils ergeben können, berücksichtigt werden.

Figur 2 zeigt einen beispielhaften, nicht-maßstabsgetreuen Schichtaufbau des Karosserieteils 10. Das Karosserieteil 10 ist beispielhaft als ein Kunststoffsandwichteil ausgeführt.

Das Karosserieteil 10 weist eine Außenlage bzw. Außenschicht 14, eine Schaumstoffzwischenschicht 16 und eine Innenlage bzw. Innenschicht 18 auf.

Die Außenlage 14 grenzt an die Schaumstoffzwischenschicht 16 an. Die Außenlage 14 ist einer Umgebung des Karosserieteils 10 zugewandt. Die Außenlage 14 kann mehrschichtig sein, zum Beispiel aufweisend, in einer Richtung von der Umgebung nach innen zu der Schaumstoffzwischenschicht 16, eine Decklackierung 20, eine Vorlackierung bzw. Grundierung 22, evtl. eine Vlieslage 24 und eine kunstharzgetränkte Glasfasermatte 26.

Die Schaumstoffzwischenschicht 16 ist zwischen der Außenlage 14 und der Innenlage 18 angeordnet. Die Schaumstoffzwischenschicht 16 kann als eine Kunststoff-Schaumzwischenschicht, vorzugsweise eine Polyurethan-Schaumstoffzwischenschicht, Polystyrol-Schaumstoffzwischenschicht oder eine Polyethylenterephthalat-Schaumstoffzwischenschicht, ausgeführt sein. Beispielsweise kann die Schaumstoffzwischenschicht 16 eine Materialstärke zwischen 10 mm und 30 mm, bevorzugt rund 20 mm, aufweisen. In die Schaumstoffzwischenschicht 16 können vereinzelt Verstärkungsbauteile, wie beispielsweise Bleche, eingeschäumt sein.

Die Innenlage 18 grenzt an die Schaumstoffzwischenschicht 16 an. Die Innenlage 18 ist einem Innenraum des Kraftfahrzeugs zugewandt. Die Innenlage 18 kann mehrschichtig sein, zum Beispiel aufweisend, in einer Richtung von dem Innenraum zu der Schaumstoffzwischenschicht 16, evtl. eine Vlieslage 30 und eine kunstharzgetränkte Glasfasermatte 28.

Eine Schwierigkeit bei der Befestigung einer Komponente an dem Karosserieteil 10 kann darin bestehen, dass sich je nach Lastrichtung die Innenlage 18 von der Schaumstoffzwischenschicht 16 oder die Außenlage von der Schaumstoffzwischenschicht 16 ablösen kann. Die hierin offenbarten Techniken können diese Schwierigkeiten überwinden. Insbesondere wird vorgeschlagen, dass eine Verbindungseinrichtung zur Befestigung der Komponente so in oder an dem Karosserieteil 10 angeordnet wird, dass die Verbindungseinrichtung sowohl an der Außenlage 14 als auch an der Innenlage 18 anliegt.

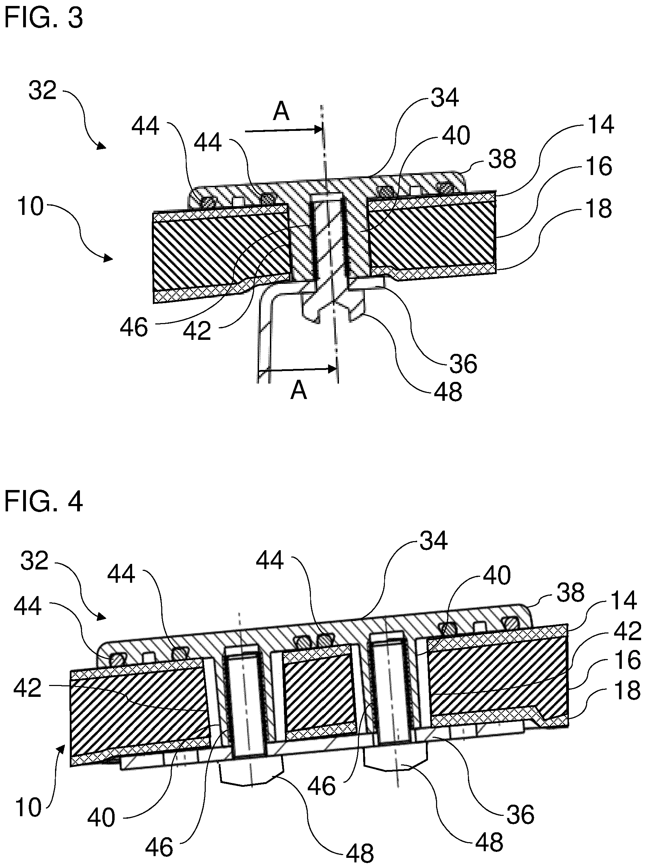

Die Figuren 3 bis 7 zeigen eine erste Technik zum Befestigen einer Komponente an dem Karosserieteil 10.

Eine Verbindungseinrichtung 32 weist eine Profilkomponente 34 und ein Befestigungselement 36 auf. Die Verbindungseinrichtung 32 kann insbesondere zur Befestigung einer Interieurkomponente an dem Karosserieteil 10 dienen, wie dargestellt ist.

Die Profilkomponente 34 liegt mit einem Flanschbereich 38 an einer der Schaumstoffzwischenschicht 16 abgewandten Seite der Außenlage 14 an. Zwei Schraubdome 40 der Profilkomponente 34 erstrecken sich durch zwei vorzugsweise gebohrte Durchgangslöcher 42 des Karosserieteils 10. Die zwei Schraubdome 40 erstrecken sich ausgehend von dem Flanschbereich 38 durch die Durchgangslöcher 42. Der Flanschbereich 38 und die zwei Schraubdome 40 bilden einen Doppel-T-Profilquerschnitt der Profilkomponente 34. Es ist auch möglich, dass die Profilkomponente 34 beispielsweise nur einen Schraubdom 40 und somit nur einen T-Profilquerschnitt aufweist. Zweckmäßig kann die Profilkomponente 34 als eine Metallkomponente, vorzugsweise eine Druckgussmetallkomponente, ausgeführt sein.

Der Flanschbereich 38 kann beispielsweise eine kreisrunde oder elliptische Form aufweisen. Zum Abdichten zwischen der Profilkomponente 34 und dem Flanschbereich 38 kann mindestens eine Dichtung 44 vorgesehen sein. Die mindestens eine Dichtung 44 kann vorzugsweise als ein Dichtring ausgeführt sein. Die mindestens eine Dichtung 44 kann in mindestens einer Ausnehmung, die der Außenlage 14 zugewandt ist, im Flanschbereich 38 angeordnet und gehalten sein. Die mindestens eine Dichtung 44 kann so angeordnet sein, dass sie um eine Basis der Schraubdome 40 herum angeordnet ist. Beispielsweise kann jeder Schraubdom 40 von einer eigenen Dichtung 44 umgeben sein und vorzugsweise eine weitere Dichtung 44 vorgesehen sein, die beide Schraubdome 40 nochmals umgibt.

Der mindestens eine Schraubdom 40 der Profilkomponente 34 verjüngt sich ausgehend von dem Flanschbereich 38. Die Verjüngung kann einerseits aus Entformungsgründen vorteilhaft sein. Andererseits kann die Verjüngung einen spielfreien Einbau der Profilkomponente 34 in die Durchgangslöcher 42 ermöglichen. Die Schraubdome 40 können ein geringfügiges Untermaß in Bezug auf eine Materialstärke der Profilkomponente 34 im Bereich der Durchgangslöcher 42 aufweisen. In anderen Worten, die Schraubdome 40 können geringfügig zurückversetzt bezüglich einer der Schaumstoffzwischenschicht 16 abgewandten Seite der Innenlage 18 sein. Die Schraubdome 40 können ein Gewindeloch 46, vorzugsweise ein Gewindesackloch, zum Einschrauben einer Schraube 48 aufweisen. Es ist möglich, dass eine Mantelfläche der Schraubdome 40 profiliert ist.

Das Befestigungselement 36 liegt an einer der Schaumstoffzwischenschicht 16 abgewandten Seite der Innenlage 18 an. Das Befestigungselement 36 dient als Verbindungselement für die am Karosserieteil 10 zu befestigende Komponente. Das Befestigungselement 36 kann beispielsweise plattenförmig sein oder zumindest einen plattenförmigen Abschnitt zur Anlage an der Innenlage 18 aufweisen. Das Befestigungselement 36 ist mit der Profilkomponente 34 verschraubt. Insbesondere können an dem Befestigungselement 36 anliegende Schrauben 48 in die Schraubdome 40 eingeschraubt werden. Das Untermaß der Schraubdome 40 kann hierbei eine Verschraubung mit Vorspannung ermöglichen. Damit kann ein mögliches Setzen des als Kunststoffsandwichteil ausgeführten Karosserieteils 10 ausgeglichen und somit ein fester Sitz sowie eine Dichtheit gewährleistet werden.

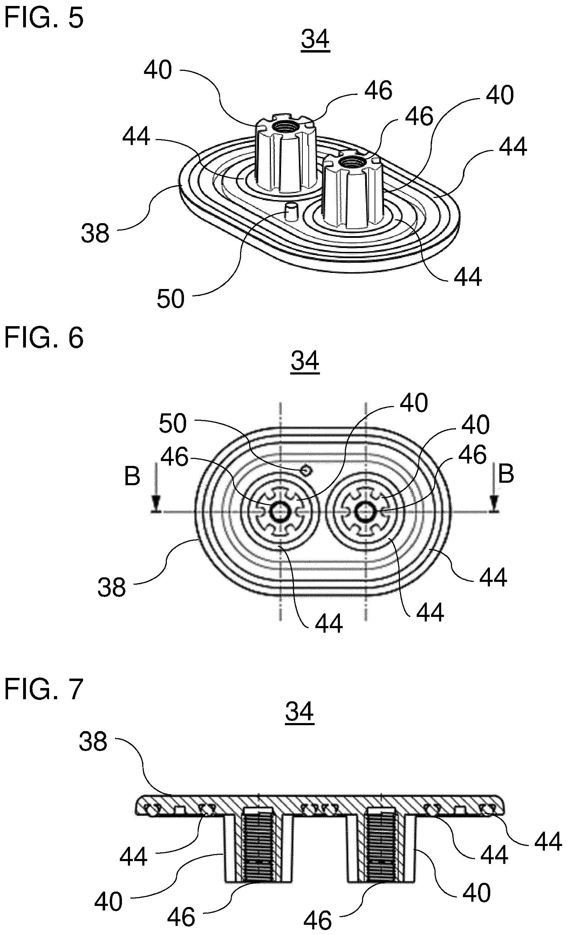

Es ist möglich, dass die Profilkomponente 34 ein Positionierelement 50, zum Beispiel einem Positionierstift, zum fehlerfreien Positionieren der Profilkomponente 34 an dem Karosserieteil 10 aufweist (siehe Figuren 5 und 6).

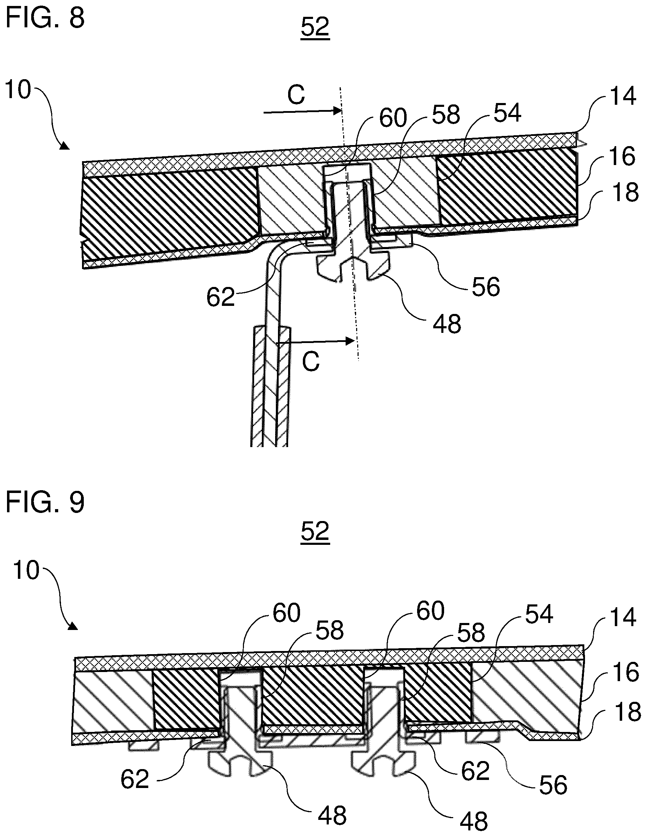

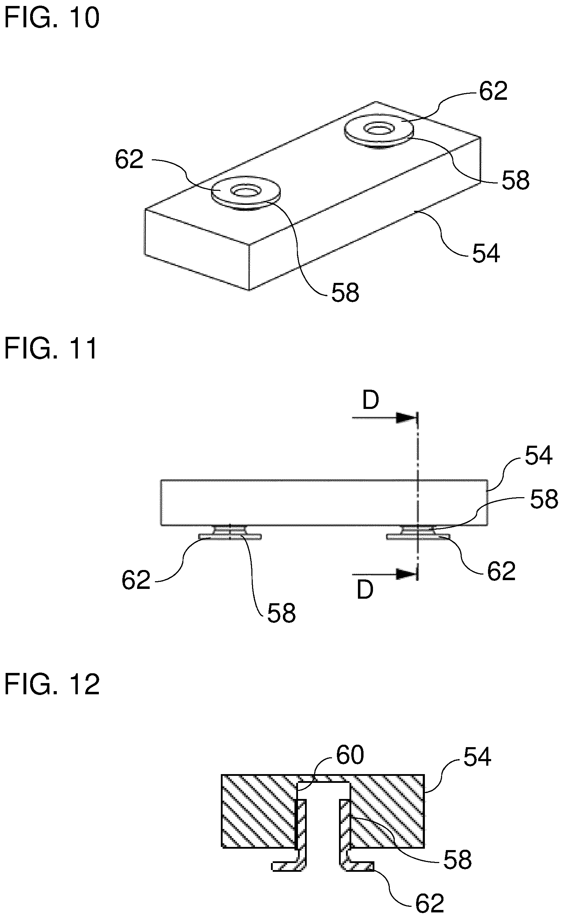

Die Figuren 8 bis 12 zeigen eine zweite Technik zum Befestigen einer Komponente an dem Karosserieteil 10.

Eine Verbindungseinrichtung 52 weist einen Block 54 und ein Befestigungselement 56 auf. Die Verbindungseinrichtung 52 kann insbesondere zur Befestigung einer Interieurkomponente oder einer Exterieurkomponente an dem Karosserieteil 10 dienen, wie dargestellt ist.

Der Block 54 liegt sowohl an einer der Schaumstoffzwischenschicht 16 zugewandten Seite der Außenlage 14 als auch an einer der Schaumstoffzwischenschicht 16 zugewandten Seite der Innenlage 18 an. Der Block 54 kann in die Schaumstoffzwischenschicht 16 miteingeschäumt sein oder in eine Ausnehmung in der Schaumstoffzwischenschicht 16 eingesetzt sein, nachdem die Schaumstoffzwischenschicht 16 geschäumt wurde. Der Block 54 kann beispielsweise im Wesentlichen quaderförmig sein, wie dargestellt ist. Es ist jedoch auch möglich, dass der Block 54 beispielsweise im Wesentlichen prismenförmig mit mindestens zwei parallelen Seiten zum Anlegen an die Außenlage 14 und die Innenlage 18 ist.

Vorzugsweise ist der Block 54 z. B. vollständig oder teilweise aus mehreren kunstharzgetränkten Glasfasermatten hergestellt. Somit können die Kontaktflächen zwischen dem Block 54 und der Außenlage 14 sowie zwischen dem Block 54 und der Innenlage 18 aus kunstharzgetränkten Glasfasermatten bestehen. Damit kann eine Haftwirkung zwischen dem Block 54 und der Außenlage 14 sowie zwischen dem Block 54 und der Innenlage 18 aufgrund einer stoffschlüssigen Verbindung zwischen dem Kunstharz bewirkt werden. Dadurch kann beispielsweise ein ungewünschtes Ablösen der Außenlage 14 von der Schaumstoffzwischenschicht 16 verhindert werden, wenn die Komponente an der Verbindungseinrichtung 52 befestigt wird.

Der Block 54 kann mindestens ein Verschraubungselement 58 aufweisen. Das mindestens eine Verschraubungselement 58 kann lösbar in mindestens einer entsprechenden vorzugsweise nachträglich gebohrten Aufnahme 60 (zum Beispiel Durchgangsloch oder Sackloch) des Blocks 54 angeordnet sein, zum Beispiel eingeschraubt sein. Vorzugsweise ist das mindestens eine Verschraubungselement 58 als eine Gewindebuchse ausgeführt, die sich vorzugsweise selbst ein Gewinde beim Einschrauben in den Block 54 schneidet. Bei Beschädigung des Verschraubungselements 58 bei der Montage kann dieses einfach ausgetauscht werden, ohne dass irgendwelche Eingriffe an dem Karosserieteil 10 erforderlich sind.

Das Verschraubungselement 58 kann einen umlaufenden Kragenabschnitt 62 aufweisen, dessen Unterseite an einer der Schaumstoffzwischenschicht 16 abgewandten Seite der Innenlage 18 anliegen kann. Die Innenlage 18 kann zwischen dem Block 54 und dem Kragenabschnitt 62 geklemmt sein.

Es ist möglich, dass der Block 54 kein gesondertes Verschraubungselement 58 aufweist, sondern direkt mindestens ein Gewindeloch zum Einschrauben mindestens einer Schraube 48 aufweist. Es ist auch möglich, dass das Verschraubungselement 58 keinen Kragenabschnitt 62 aufweist.

Das Befestigungselement 56 zum Befestigen der Komponente kann an einer der Schaumstoffzwischenschicht 16 abgewandten Seite der Innenlage 18 anliegen. Das Befestigungselement 56 kann mit dem Block 54 verschraubt sein, vorzugsweise mittels mindestens einer Schraube 48.

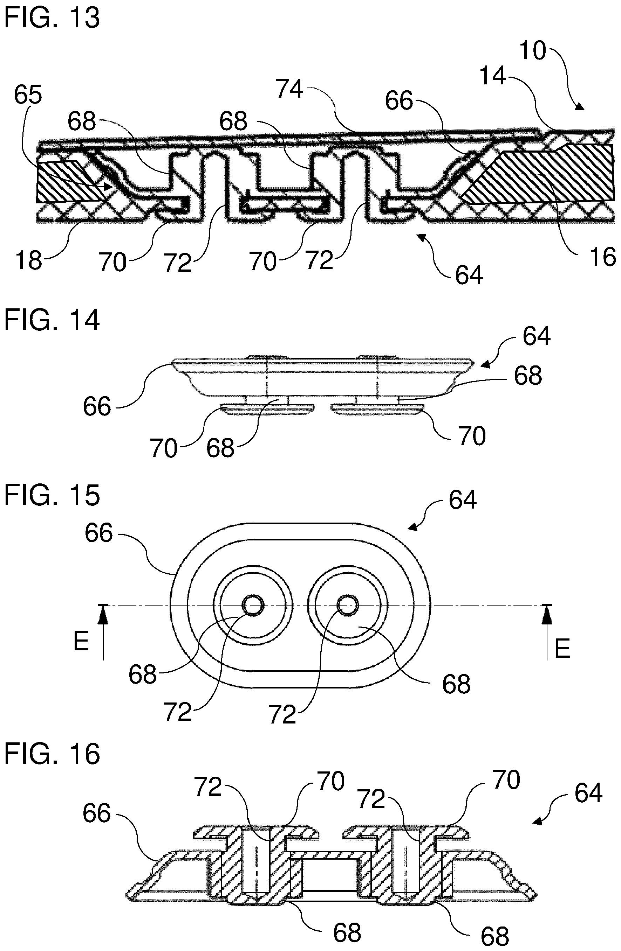

Die Figuren 13 bis 16 zeigen eine dritte Technik zum Befestigen einer Komponente an dem Karosserieteil 10.

Eine Verbindungseinrichtung 64 weist eine Profilkomponente 66 auf. Die Verbindungseinrichtung 64 kann insbesondere zur Befestigung einer Interieurkomponente an dem Karosserieteil 10 dienen, wie dargestellt ist.

Das Karosserieteil 10 weist eine Ausnehmung 65 auf, die durch eine Vertiefung der Außenlage 14 gebildet ist. Die Außenlage 14 und die Innenlage 18 gehen an Randbereichen der Ausnehmung 65 direkt ineinander über, da sie bspw. beim Herstellen zusammengefahren wurden. Dadurch kann bspw. ein Bodenbereich der Ausnehmung 65 gemeinsam durch die ineinander übergehenden Lagen 14, 18 gebildet sein.

In die Ausnehmung 65 ist die Profilkomponente 66 eingesetzt. Die Profilkomponente 66 liegt an einer der Schaumstoffzwischenschicht 16 abgewandten Seite der Außenlage 14, die eine Mantelfläche bzw. Umfangswand der Ausnehmung 65 bildet, an. Die Profilkomponente 66 liegt an dem Bodenbereich der Ausnehmung 65 an.

Wie dargestellt ist, kann die Profilkomponente 66 ein Hutprofil aufweisen. Es ist auch möglich, dass die Profilkomponente 66 beispielsweise ein U-Profil aufweist. Vorzugsweise ist die Profilkomponente als ein Blechformteil ausgeführt. Mindestens eine Schraube kann mit der Profilkomponente 66 verschraubt werden, um die Komponente an dem Karosserieteil 10 zu befestigen.

In der Profilkomponente 66 ist mindestens ein Verschraubungselement 68, z. B. eine Mutter, für eine Schraubverbindung zur Befestigung der Komponente aufgenommen. Das Verschraubungselement 68 kann nach dem Einsetzen der Profilkomponente 66 in die Ausnehmung 65 bspw. eingesteckt, eingeschraubt oder eingeschweißt werden, vorzugsweise von der Innenseite aus. Das mindestens eine Verschraubungselement 68 kann ein Gewindeloch 72 zum Einschrauben einer Schraube zur Befestigung der Komponente aufweisen. Das mindestens eine Verschraubungselement 68 kann einen umlaufenden Kragenabschnitt 70 aufweisen. Die Unterseite des Kragenabschnitts 70 kann an der Innenlage 18 anliegen.

Im Bereich der Außenlage 14 kann die Profilkomponente 66 von einer Abdeckung 74 abdichtend abgedeckt sein. Die Abdeckung 74 kann bspw. mit der Außenlage 14 verklebt werden, nachdem die Profilkomponente 66 in die Ausnehmung 65 eingesetzt wurde. Die Außenlage 14 kann zur Aufnahme der Abdeckung 74 eine Vertiefung aufweisen, die die Ausnehmung 65 umläuft.

Es ist möglich, dass die Verbindungseinrichtungen 32, 52 oder 64 mehrfach verwendet werden, um eine einzige Komponente an dem Karosserieteil 10 zu befestigen. Wie in Figur 1 beispielhaft dargestellt ist, kann beispielsweise die Verbindungseinrichtung 32 (oder 52 oder 64) zweifach als Gleichteil verwendet werden, um eine Interieurkomponente, insbesondere eine Liege, an zwei Stellen des Karosserieteils 10 zu befestigen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Karosserieteils und/oder der Verbindungseinrichtung des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Karosserieteil
- 12: Komponente
- 14: Außenlage
- 16: Schaumstoffzwischenschicht
- 18: Innenlage
- 20: Decklackierung
- 22: Vorlackierung
- 24: Vlieslage
- 26: Kunstharzgetränkte Glasfasermatte
- 28: Kunstharzgetränkte Glasfasermatte
- 30: Vlieslage
- 32: Verbindungseinrichtung
- 34: Profilkomponente
- 36: Befestigungselement
- 38: Flanschbereich
- 40: Schraubdom
- 42: Durchgangsloch
- 44: Dichtung
- 46: Gewindeloch
- 48: Schraube
- 50: Positionierelement
- 52: Verbindungseinrichtung
- 54: Block
- 56: Befestigungselement
- 58: Verschraubungselement
- 60: Aufnahme
- 62: Kragenabschnitt
- 64: Verbindungseinrichtung
- 65: Ausnehmung
- 66: Profilkomponente
- 68: Verschraubungselement
- 70: Kragenabschnitt
- 72: Gewindeloch
- 74: Abdeckung

## Patentansprüche

1. Vorrichtung zur Befestigung einer Komponente (12) an einer Karosserie eines Kraftfahrzeugs, vorzugsweise Nutzfahrzeugs, aufweisend:
ein Karosserieteil (10), vorzugsweise ein Karosseriedachteil, wobei das Karosserieteil (10) eine Außenlage (14), eine Schaumstoffzwischenschicht (16) und eine Innenlage (18) aufweist, wobei die Schaumstoffzwischenschicht (16) zwischen der Außenlage (14) und der Innenlage (18) angeordnet ist; und
eine Verbindungseinrichtung (32; 52; 64), die an der Außenlage (14) und an der Innenlage (18) anliegt und die zur Befestigung der Komponente (12) ausgebildet ist,
**dadurch gekennzeichnet, dass** die Verbindungseinrichtung (52) einen Block (54) aufweist, der an einer der Schaumstoffzwischenschicht (16) zugewandten Seite der Außenlage (14) und an einer der Schaumstoffzwischenschicht (16) zugewandten Seite der Innenlage (18) anliegt,
wobei:
- der Block (54) in die Schaumstoffzwischenschicht (16) miteingeschäumt ist oder in eine Ausnehmung in der Schaumstoffzwischenschicht (16) eingesetzt ist; und/oder
- der Block (54) aus mindestens einer kunstharzgetränkten Glasfasermatte hergestellt ist, vorzugsweise mehrlagig; und/oder
- zumindest Kontaktflächen zwischen dem Block (54) und der Außenlage (14) und/oder dem Block (54) und der Innenlage (18) aus dem gleichen Material hergestellt sind, vorzugsweise aus einer kunstharzgetränkten Glasfasermatte; und/oder
- der Block (54) im Wesentlichen quaderförmig oder im Wesentlichen prismenförmig mit mindestens zwei parallelen Seiten zum Anlegen an die Außenlage (14) und die Innenlage (18) ist.

2. Vorrichtung nach Anspruch 1, ferner aufweisend:
die Komponente (12), vorzugsweise Interieurkomponente oder Exterieurkomponente, wobei die Komponente (12) an der Verbindungseinrichtung (32; 52; 64) befestigt ist und wobei die Komponente (12) vorzugsweise als eine Liege, eine Liegenherausfallsicherung, eine Gepäckaufbewahrung, ein Dachspoiler, ein Windleitelement, ein Beleuchtungselement oder ein Geräteträger ausgeführt ist.

3. Vorrichtung nach Anspruch 1 oder Anspruch 2, wobei:
das Karosserieteil (10) als ein Kunststoffsandwichteil ausgeführt ist; und/oder
die Schaumstoffzwischenschicht (16) als eine Kunststoff-Schaumzwischenschicht, vorzugsweise eine Polyurethan-Schaumstoffzwischenschicht, eine Polystyrol-Schaumstoffzwischenschicht oder eine Polyethylenterephthalat-Schaumstoffzwischenschicht, ausgeführt ist; und/oder
die Außenlage (14) und/oder die Innenlage (18) eine kunstharzgetränkte Glasfasermatte in Kontakt mit der Schaumstoffzwischenschicht (16) aufweist.

4. Vorrichtung nach einem der vorherigen Ansprüche, wobei:
die Verbindungseinrichtung (32; 52; 64) zumindest teilweise in die Schaumstoffzwischenschicht (16) miteingeschäumt ist; oder
die Verbindungseinrichtung (32; 52; 64) zumindest teilweise in eine Ausnehmung in der Schaumstoffzwischenschicht (16) eingesteckt ist; oder
die Verbindungseinrichtung (32; 52; 64) durch ein Durchgangsloch (42) in der Außenlage (14), der Schaumstoffzwischenschicht (16) und der Innenlage (18) durchgesteckt ist.

5. Vorrichtung nach einem der vorherigen Ansprüche, wobei:
die Verbindungseinrichtung (32; 52; 64) an einer der Schaumstoffzwischenschicht (16) abgewandten Seite der Außenlage (14) oder einer der Schaumstoffzwischenschicht (16) zugewandten Seite der Außenlage (14) anliegt; und/oder
die Verbindungseinrichtung (32; 52; 64) an einer der Schaumstoffzwischenschicht (16) abgewandten Seite der Innenlage (18) oder an einer der Schaumstoffzwischenschicht (16) zugewandten Seite der Innenlage (18) anliegt.

6. Vorrichtung nach einem der vorherigen Ansprüche, wobei:
die Verbindungseinrichtung (32; 52; 64) stoffschlüssig mit der Außenlage (14) und/oder der Innenlage (18) verbunden ist, vorzugsweise durch aneinanderhaftende kunstharzgetränkte Glasfasermatten; und/oder
die Verbindungseinrichtung (32; 52; 64) an der Außenlage (14) und/oder der Innenlage (18) anhaftet.

7. Vorrichtung nacheinem der vorherigen Ansprüche, wobei:
der Block (54) zum Verschrauben mit der zu befestigenden Komponente (12) ausgebildet ist; oder
der Block (54) mindestens ein Gewindeloch für eine Schraubverbindung zur Befestigung der Komponente (12) aufweist; oder
mindestens ein Verschraubungselement (58) zur Befestigung der Komponente (12), vorzugsweise lösbar, in dem Block (54) aufgenommen ist, wobei besonders bevorzugt das mindestens eine Verschraubungselement (58) einen umlaufenden Kragenabschnitt (62) aufweist, dessen Unterseite an einer der Schaumstoffzwischenschicht (16) abgewandten Seite der Innenlage (18) anliegt.

8. Kraftfahrzeug, vorzugsweise Nutzfahrzeug, mit einer Vorrichtung nach einem der vorherigen Ansprüche.

## Claims

1. A device for fastening a component (12) to a body of a motor vehicle, preferably a utility vehicle, comprising:
a body part (10), preferably a body roof part, the body part (10) having an outer layer (14), a foam intermediate layer (16) and an inner layer (18), the foam intermediate layer (16) being arranged between the outer layer (14) and the inner layer (18); and
a connecting device (32; 52; 64) that abuts the outer layer (14) and the inner layer (18) and that is configured to fasten the component (12),
**characterized in that** the connecting device (52) comprises a block (54) which abuts against a side of the outer layer (14) facing the foam intermediate layer (16) and against a side of the inner layer (18) facing the foam intermediate layer (16),
wherein:
- the block (54) is co-foamed into the foam intermediate layer (16) or is inserted into a recess in the foam intermediate layer (16); and/or
- the block (54) is made of at least one synthetic-resin-impregnated glass fiber mat, preferably in multiple layers; and/or
- at least contact surfaces between the block (54) and the outer layer (14) and/or the block (54) and the inner layer (18) are made of the same material, preferably of a synthetic resin-impregnated glass fiber mat; and/or
- said block (54) is substantially cuboid or substantially prismatic with at least two parallel sides for abutting said outer layer (14) and said inner layer (18).

2. The device according to claim 1, further comprising:
the component (12), preferably interior component or exterior component, wherein the component (12) is fastened to the connecting device (32; 52; 64), and wherein the component (12) is preferably configured as a couch, a couch fall-out protection, a luggage storage, a roof spoiler, a wind deflector, a lighting element or an equipment carrier.

3. The device according to claim 1 or claim 2, wherein:
the body part (10) is embodied as a plastic sandwich part; and/or
the foam intermediate layer (16) is embodied as a plastic foam intermediate layer, preferably a polyurethane foam intermediate layer, a polystyrene foam intermediate layer or a polyethylene terephthalate foam intermediate layer; and/or
the outer layer (14) and/or the inner layer (18) comprises a synthetic resin impregnated glass fiber mat in contact with the foam intermediate layer (16).

4. The device according to any one of the preceding claims, wherein:
the connecting device (32; 52; 64) is at least partially co-foamed into the foam intermediate layer (16); or
the connecting device (32; 52; 64) is at least partially inserted into a recess in the foam intermediate layer (16); or
the connecting device (32; 52; 64) is inserted through a through hole (42) in the outer layer (14), the foam intermediate layer (16) and the inner layer (18).

5. The device according to any one of the preceding claims, wherein:
the connecting device (32; 52; 64) abuts against a side of the outer layer (14) facing away from the foam intermediate layer (16) or against a side of the outer layer (14) facing the foam intermediate layer (16); and/or
the connecting device (32; 52; 64) abuts against a side of the inner layer (18) facing away from the foam intermediate layer (16) or against a side of the inner layer (18) facing the foam intermediate layer (16).

6. The device according to any of the previous claims, wherein:
the connecting device (32; 52; 64) is connected to the outer layer (14) and/or the inner layer (18) in a materially bonded manner, preferably by means of glass fiber mats impregnated with synthetic resin and adhering to one another; and/or
the connecting device (32; 52; 64) is adhered to the outer layer (14) and/or the inner layer (18).

7. The device according to any one of the preceding claims, wherein:
the block (54) is configured for screwing to the component (12) to be fastened; or
the block (54) comprises at least one threaded hole for a screw connection for fastening the component (12); or
at least one screw connection element (58) for fastening the component (12) is accommodated, preferably releasably, in the block (54), the at least one screw connection element (58) particularly preferably having a circumferential collar section (62), the underside of which abuts against a side of the inner layer (18) facing away from the foam intermediate layer (16).

8. A motor vehicle, preferably a utility vehicle, having a device according to one of the preceding claims.

## Revendications

1. Dispositif de fixation d'un composant (12) à une carrosserie d'un véhicule automobile, de préférence un véhicule utilitaire, ledit dispositif comportant :
une partie de carrosserie (10), de préférence une partie de toit de carrosserie, la partie de carrosserie (10) comportant une couche extérieure (14), une couche de mousse intermédiaire (16) et une couche intérieure (18), la couche de mousse intermédiaire (16) étant disposée entre la couche extérieure (14) et la couche intérieure (18) ; et
un module de liaison (32 ; 52 ; 64) qui est en appui sur la couche extérieure (14) et la couche intérieure (18) et qui est destiné à fixer le composant (12),
**caractérisé en ce que** le module de liaison (52) comporte un bloc (54) qui est en appui sur un côté de la couche extérieure (14) dirigée vers la couche de mousse intermédiaire (16) et sur un côté de la couche intérieure (18) dirigée vers la couche de mousse intermédiaire (16),
- le bloc (54) étant expansé jusque dans la couche de mousse intermédiaire (16) ou étant inséré dans un évidement ménagé dans la couche de mousse intermédiaire (16) ; et/ou
- le bloc (54) étant réalisé à partir d'au moins un mat de fibres de verre imprégné de résine synthétique, de préférence en plusieurs couches ; et/ou
- au moins des surfaces de contact entre le bloc (54) et la couche extérieure (14) et/ou le bloc (54) et la couche intérieure (18) étant réalisées à partir de la même matière, de préférence à partir d'un mat de fibres de verre imprégné de résine synthétique ; et/ou
- le bloc (54) étant sensiblement parallélépipédique ou sensiblement prismatique avec au moins deux côtés parallèles destinés à venir en appui sur la couche extérieure (14) et la couche intérieure (18) .

2. Dispositif selon la revendication 1, comportant en outre :
le composant (12), de préférence un composant intérieur ou un composant extérieur, le composant (12) étant fixé au module de raccordement (32 ; 52 ; 64) et le composant (12) étant de préférence réalisé sous la forme d'une couchette, un dispositif antichute de couchette, un coffre à bagages, un becquet de toit, un déflecteur de vent, un élément d'éclairage ou un support d'appareil.

3. Dispositif selon la revendication 1 ou la revendication 2 :
la partie de carrosserie (10) étant réalisée sous la forme d'une pièce en sandwich de matière synthétique ; et/ou
la couche de mousse intermédiaire (16) étant réalisée sous la forme d'une couche de mousse synthétique intermédiaire, de préférence une couche de mousse de polyuréthanne intermédiaire, une couche de mousse de polystyrène intermédiaire ou une couche de mousse de polyéthylène téréphtalate intermédiaire ; et/ou
la couche extérieure (14) et/ou la couche intérieure (18) comportant un mat de fibres de verre imprégné de résine synthétique en contact avec la couche de mousse intermédiaire (16).

4. Dispositif selon l'une des revendications précédentes :
le module de liaison (32 ; 52 ; 64) étant au moins partiellement expansé jusque dans la couche de mousse intermédiaire (16) ; ou
le module de liaison (32 ; 52 ; 64) étant inséré au moins partiellement dans un évidement ménagé dans la couche de mousse intermédiaire (16) ; ou
le module de liaison (32 ; 52 ; 64) étant enfiché à travers un trou traversant (42) ménagé dans la couche extérieure (14), la couche de mousse intermédiaire (16) et la couche intérieure (18).

5. Dispositif selon l'une des revendications précédentes :
le module de liaison (32 ; 52 ; 64) venant en appui sur un côté de la couche extérieure (14) qui est à l'opposé de la couche de mousse intermédiaire (16) ou sur un côté de la couche extérieure (14) qui est dirigé vers la couche de mousse intermédiaire (16) ; et/ou
le module de liaison (32 ; 52 ; 64) venant en appui sur un côté de la couche intérieure (18) qui est à l'opposé de la couche de mousse intermédiaire (16) ou sur un côté de la couche intérieure (18) qui est dirigé vers la couche de mousse intermédiaire (16).

6. Dispositif selon l'une des revendications précédentes :
le module de liaison (32 ; 52 ; 64) étant relié par une liaison de matière à la couche extérieure (14) et/ou à la couche intérieure (18), de préférence au moyen de mats de fibres de verre imprégnés de résine synthétique et adhérant les uns aux autres ; et/ou
le module de liaison (32 ; 52 ; 64) adhérant à la couche extérieure (14) et/ou à la couche intérieure (18) .

7. Dispositif selon l'une des revendications précédentes :
le bloc (54) étant conçu pour être vissé au composant (12) à fixer ; ou
le bloc (54) comportant au moins un trou taraudé destiné à une liaison par vis afin de fixer le composant (12) ; ou
au moins un élément de vissage (58) étant logé dans le bloc (54) afin de fixer le composant (12), de préférence de manière amovible, l'au moins un élément de vissage (58) comportant de manière particulièrement préférée une portion formant collerette circonférentielle (62) dont le côté inférieur vient en appui sur un côté de la couche intérieure (18) qui est à l'opposé des couches de mousse intermédiaires (16).

8. Véhicule automobile, de préférence véhicule utilitaire, comprenant un dispositif selon l'une des revendications précédentes.
